# DEMANDE DE BREVET EUROPEEN

(11) **EP 1 150 533 A1**
(43) Date de publication de la demande: **31.10.2001**
(21) Numéro de dépôt: 01401054.0
(22) Date de dépôt: 25.04.2001
(51) Int. Cl.: H04Q 7/38

(54) **Procédé pour appeler un terminal téléphonique d'un réseau local de téléphonie cellulaire et réseau local associé**

(30) Priorité: 26.04.2000 FR 0005290
(71) Demandeur: SAGEM SA, 75116 Paris (FR)
(72) Inventeur: Sabatier, Pierre, 95800 Cergy Saint Christophe (FR)
(74) Mandataire: Bloch, Gérard

(57) **Abrégé**

Le terminal téléphonique cellulaire (2b) peut se relier à une pluralité de bases cellulaires (1a-1e) d'un réseau local (10) et passer d'une base à l'autre, ainsi qu'à une base cellulaire (9) d'un réseau externe (20), auquel est connecté le réseau local (10). Le réseau local (10) détermine la base (1a-1e) à laquelle le terminal (2b) est relié et dirige les appels destinés au terminal (2b) vers cette base (1a-1e). Lorsque le terminal (2b) pénètre dans la cellule de la base externe (9), celle-ci envoie au réseau local (10) un message indiquant la présence du terminal (2b) dans sa cellule, pour que le réseau local (10) dirige vers elle les appels destinés au terminal (2b).

## Description

Un réseau local de téléphonie radio, ou cellulaire, tel qu'on en trouve dans de nombreuses entreprises, comprend une pluralité de bases radios, ou cellulaires, auxquelles un terminal téléphonique radio (téléphone, ordinateur portable avec émetteur/récepteur radio, etc.) peut se relier, avec la possibilité de passer d'une base à l'autre. Un tel réseau local est généralement connecté à un réseau externe public, par exemple au réseau RTC et/ou à l'Internet.

D'emblée, on notera que par "réseau cellulaire", on entend désigner tout type de réseau comportant une pluralité de bases, ou de stations de base, couvrant chacune une cellule topographique déterminée. A titre d'exemple, on peut citer les réseaux DECT.

Le réseau localise le terminal, en déterminant la base à laquelle il est relié. En cas d'appel destiné au terminal, le réseau dirige l'appel vers la base à laquelle le terminal est relié. L'appel peut être interne, l'appelant appartenant dans ce cas au réseau local, ou bien externe, dans le cas où l'appelant appartient au réseau externe auquel est connecté le réseau local.

L'utilisation d'un tel terminal téléphonique est toutefois limitée à la zone de couverture du réseau local. La présente invention propose de pallier cet inconvénient.

A cet effet, l'invention concerne un procédé pour appeler un terminal téléphonique cellulaire, ledit terminal pouvant se relier à une pluralité de bases cellulaires d'un réseau local et passer d'une base à l'autre, dans lequel le réseau local détermine la base à laquelle le terminal est relié et dirige les appels destinés au terminal vers cette base, procédé caractérisé par le fait que, le terminal pouvant également se relier à une base cellulaire d'un réseau externe, auquel est connecté le réseau local, lorsque le terminal pénètre dans la cellule de la base externe, celle-ci envoie au réseau local un message indiquant la présence du terminal dans sa cellule, pour que le réseau local dirige vers elle les appels destinés au terminal.

Grâce à l'invention, la base externe fait fictivement partie du réseau local, dès lors qu'elle adresse à celui-ci un message indiquant la présence du terminal dans sa cellule. Ainsi, le terminal est utilisable non seulement dans la zone de couverture du réseau local, mais également dans celle de la base externe, ces deux zones pouvant par exemple correspondre au lieu de travail et au domicile d'un utilisateur du terminal.

De préférence, lorsque le terminal quitte la cellule de la base externe, ladite base envoie au réseau local un message indiquant la sortie du terminal hors de sa cellule.

Avantageusement, le terminal ayant un numéro d'appel et chaque base ayant une adresse de réseau, le réseau local mémorise, en les associant, le numéro d'appel du terminal et l'adresse de la base à laquelle il est relié et, en cas d'appel destiné au terminal, le réseau recherche l'adresse de base, associée en mémoire au numéro d'appel du terminal, et dirige l'appel vers cette adresse.

L'invention concerne également un réseau téléphonique local, pour la mise en oeuvre du procédé ci-dessus, comprenant une pluralité de bases cellulaires, auxquelles au moins un terminal téléphonique peut se relier, avec la possibilité de passer d'une base à l'autre, des moyens de localisation du terminal permettant de déterminer la base à laquelle le terminal est relié, des moyens de routage des appels, destinés au terminal, vers la base à laquelle celui-ci est relié, et des moyens de connexion à un réseau externe, réseau caractérisé par le fait que, le terminal pouvant se relier à une base cellulaire du réseau externe, les moyens de localisation sont agencés pour, sur réception d'un message de la base externe indiquant la présence du terminal dans sa cellule, localiser le terminal dans la cellule de la base externe, et les moyens de routage sont agencés pour diriger les appels destinés au terminal vers la base externe lorsque le terminal est localisé dans la cellule de celle-ci.

Le réseau local de l'invention est en fait étendu à la base externe.

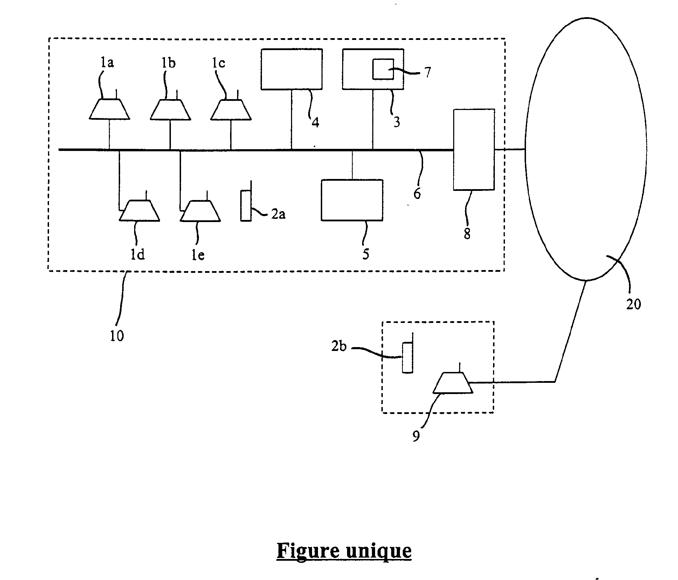

L'invention sera mieux comprise à l'aide de la description suivante d'une forme de réalisation particulière du procédé d'appel et du réseau local de l'invention, en référence à la figure unique annexée qui représente un schéma du réseau local de téléphonie radio relié à une base radio externe, par l'intermédiaire d'un réseau externe.

Dans l'exemple particulier de la description, le réseau local 10, ou LAN (Local Area Network), est un réseau interne d'entreprise, de type Intranet, de commutation de paquets.

Le réseau 10 comprend une pluralité de bases cellulaires 1a-1e, en l'espèce des bases DECT, auxquelles des terminaux téléphoniques cellulaires 2a-2b, ici des combinés radios DECT, peuvent se relier par liaison radio, avec la possibilité de passer d'une base à l'autre. Chaque terminal 2a (2b) a un numéro d'appel unique, constituant un identifiant du terminal 2a (2b).

Par définition, on qualifiera par la suite de "terminal du réseau local", tout terminal pouvant se relier aux bases 1 du réseau local 10, qu'il soit ou non effectivement relié à l'une de ces bases 1.

Le réseau 10 comprend en outre un serveur 3 de localisation des terminaux 2a, 2b, un routeur d'appels 4, un serveur de boîtes vocales 5 et un point 8 d'accès de réseau, par l'intermédiaire duquel le réseau 10 est connecté à un réseau de communication externe 20, en l'espèce le réseau téléphonique commuté RTC.

Les bases 1a-1e, le serveur de localisation 3, le routeur 4, le serveur 5 de boîtes vocales et le point d'accès 8 sont connectées à une artère centrale 6, ou "backbone", à haut débit de données. Chacune de ces entités du réseau local 10 (bases 1a-1e, serveurs 3 et 5, routeur 4, point d'accès 8) a une adresse informatique de type IP (Internet Protocol - Protocole Internet) sur le réseau 10.

Le serveur de localisation 3 comprend une mémoire de stockage d'une table de localisation 7, contenant les numéros d'appel des terminaux 2a-2b du réseau local 10. Lorsqu'un terminal 2a (2b) pénètre dans la cellule (c'est-à-dire la zone de couverture) d'une base la (1b-1e) et s'y relie, la base la (1b-1e) envoie au serveur de localisation 3 un message indiquant la présence du terminal 2a (2b) dans sa cellule. Le message contient le numéro d'appel du terminal 2a (2b) et l'adresse de la base la (1b-1e) considérée. Sur réception de ce message, le serveur 3 mémorise l'adresse de la base la (1b-1e), à laquelle le terminal considéré 2a (2b) est relié, dans la table de localisation 7, en l'associant au numéro d'appel du terminal 2a (2b). Lorsque le terminal 2a (2b) quitte la cellule de la base la (1b-1e), celle-ci en informe le serveur 3, par l'envoi d'un message le spécifiant.

Le routeur d'appels 4 fait fonction d'autocommutateur local. Il est agencé pour diriger les appels destinés aux terminaux 2a-2b du réseau local 10 afin de mettre les correspondants, appelant et appelé, en communication. En cas d'appel destiné à un terminal 2a (2b), le routeur 4 consulte la table de localisation 7, afin de déterminer l'adresse de la base 1a-1e associée au numéro d'appel de ce terminal 2a (2b), et dirige l'appel vers cette adresse.

Le point d'accès 8, connecté au réseau téléphonique externe 20, fait fonction de passerelle entre le réseau local 10 et le réseau externe 20, assurant la conversion des signaux téléphoniques analogiques en paquets de données et inversement. Un numéro d'appel téléphonique sur le réseau externe 20 est attribué au point d'accès 8.

Le serveur 5 comprend, pour chaque terminal 2a (2b) du réseau local 10, une boîte vocale, c'est-à-dire un répondeur-enregistreur de messages vocaux.

Le terminal 2b peut également se relier à une base radio DECT 9, externe au réseau local 10 et connectée au réseau externe 20. Cette base externe 9 peut, par exemple, être située au domicile d'un utilisateur du terminal 2b. La base 9 a un numéro d'appel téléphonique, constituant une adresse sur le réseau externe 20. Cette base DECT 9 est agencée pour informer le réseau local 10 de la présence du terminal 2b dans sa cellule et de la sortie du terminal 2b hors de sa cellule, comme cela sera explicité plus loin.

Lorsqu'un terminal 2a-2b, relié à une base 1a-1e du réseau local 10, appelle un numéro, celui-ci est directement envoyé au routeur 4 qui se charge de diriger l'appel. En revanche, pour appeler un terminal 2a-2b du réseau local 10 depuis un terminal externe au réseau local 10, par exemple un téléphone ordinaire connecté au réseau téléphonique 30, le terminal appelant appelle d'abord le point d'accès 8, à travers le réseau téléphonique 20, et, après établissement de la communication, il envoie au point d'accès 8 le numéro d'appel du terminal appelé 2 qui est retransmis vers le routeur 4.

Le procédé d'appel du terminal 2b va maintenant être explicité.

Lorsque le terminal 2b est relié à l'une des bases 1a-1e du réseau local 10, par exemple à la base la, l'adresse de cette base la est mémorisée dans la table 7 et y est associée au numéro d'appel du terminal 2b.

En cas d'appel, interne ou externe, destiné au terminal 2b, le numéro d'appel du terminal 2b est envoyé au routeur 4. Celui-ci consulte la table de localisation 7, en extrait l'adresse de la base la à laquelle le terminal 2b est relié, associée au numéro d'appel du terminal 2b, et dirige l'appel vers cette base la.

Lorsque le terminal 2b passe d'une base la à une autre base 1b, l'ancienne base la envoie au serveur 3 un message indiquant la sortie du terminal 2b hors de sa cellule, puis la nouvelle base 1b envoie au serveur de localisation 3 un message indiquant la présence du terminal 2b dans sa cellule. Sur réception de ces messages, le serveur 3 met à jour la table de localisation 7 en y mémorisant l'adresse de la nouvelle base 1b, à la place de l'adresse de l'ancienne base la associée au numéro d'appel du terminal 2b.

Lorsque le terminal 2b pénètre dans la cellule de la base externe 9, il détecte des signaux de balise émis par la base 9 et se relie à elle, après identification. La base 9 détecte ainsi la présence du terminal 2b dans sa cellule et appelle alors automatiquement le point d'accès 8, à travers le réseau téléphonique 20. Après établissement de la communication entre la base 9 et le point d'accès 8, la base 9 envoie au serveur de localisation 3 un message indiquant la présence du terminal 2b dans sa cellule. Ce message contient le numéro d'appel du terminal 2b et le numéro d'appel téléphonique de la base 9. Sur réception de ce message, le serveur de localisation 3 mémorise le numéro d'appel téléphonique de la base 9, en l'associant au numéro d'appel du terminal 2b dans la table 7.

En cas d'appel, interne ou externe, destiné au terminal 2b, le numéro d'appel du terminal 2b est envoyé au routeur 4. Celui-ci consulte alors la table 7 et en extrait le numéro d'appel téléphonique de la base 9, associé au numéro d'appel du terminal 2b. Le routeur 4 identifie ainsi la base 9 à laquelle le terminal appelé 2b est relié. Sous la commande du routeur 4, le point d'accès 8 appelle alors la base 9 à travers le réseau téléphonique externe 20. Sur réception de l'appel, la base 9 décroche puis le routeur 4 met en communication l'appelant et le terminal appelé 2b. Le routeur 4 dirige ainsi l'appel vers la base 9.

Lorsque le terminal 2b n'est relié ni à l'une des bases 1a-1e du réseau local 10, ni à la base externe 9, le numéro d'appel du terminal 2b n'est associé à aucune adresse de base dans la table de localisation 7. Dans ce cas, le routeur 4 dirige les appels, destinés au terminal 2b, vers la boîte vocale de celui-ci, l'appelant pouvant ainsi laisser un message vocal.

Lorsque le terminal 2b quitte la cellule de la base 9, celle-ci appelle alors le point d'accès 8 et, après établissement de la communication, envoie au serveur de localisation 3 un message indiquant le départ du terminal 2b hors de sa cellule. Ce message contient les numéros d'appel respectifs du terminal 2b et de la base 9. Sur réception de ce message, le serveur de localisation 3 met à jour la table 7 en y supprimant le numéro d'appel de la base 9, associée au numéro d'appel du terminal 2b.

Dans la description qui précède, les terminaux 2a-2b du réseau local 10 sont des combinés DECT. L'invention pourrait également s'appliquer à tout autre type de terminal de communication, comme par exemple à un téléphone bimode cellulaire/sans fil ou à un ordinateur portable.

Dans une variante de réalisation, les terminaux 2a-2b comprennent une application de messagerie de type Internet et le réseau local 10 comprend un serveur de messagerie hébergeant, pour chaque terminal du réseau local, une boîte à lettres. Lorsque le terminal 2b est relié à une base la (1b-1e) du réseau local, le serveur de messagerie se charge de lui transmettre les éventuels messages qui lui sont adressés, par l'intermédiaire de la base 1a (1b-1e) à laquelle il est relié. En revanche, dans l'hypothèse où le point d'accès 8 est une passerelle seulement vocale, lorsque le terminal 2b est relié à la base externe 9, le serveur de messagerie conserve le ou les messages destinés au terminal 2b dans sa boîte à lettres et, sous sa commande, le point d'accès 8 appelle la base 9 et, après établissement de la communication, notifie la réception du ou des messages au terminal 2b, par exemple par l'envoi d'un message vocal l'indiquant.

Le réseau local 10 pourrait être relié à tout autre réseau de communication externe, par exemple au réseau RNIS et/ou à l'Internet.

## Revendications

1. Procédé pour appeler un terminal téléphonique cellulaire (2b), ledit terminal (2b) pouvant se relier à une pluralité de bases cellulaires (1a-1e) d'un réseau local (10) et passer d'une base à l'autre, dans lequel le réseau local (10) détermine la base (1a-1e) à laquelle le terminal (2b) est relié et dirige les appels destinés au terminal (2b) vers cette base (1a-1e), procédé **caractérisé par le fait que**, le terminal (2b) pouvant également se relier à une base cellulaire (9) d'un réseau externe (20), auquel est connecté le réseau local (10), lorsque le terminal (2b) pénètre dans la cellule de la base externe (9), celle-ci envoie au réseau local (10) un message indiquant la présence du terminal (2b) dans sa cellule, pour que le réseau local (10) dirige vers elle les appels destinés au terminal (2b).

2. Procédé selon la revendication 1, dans lequel, lorsque le terminal (2b) quitte la cellule de la base externe (9), ladite base (9) envoie au réseau local (10) un message indiquant la sortie du terminal (2b) hors de sa cellule.

3. Procédé selon l'une des revendications 1 et 2, dans lequel, le terminal (2b) ayant un numéro d'appel et chaque base (1a-1e, 9) ayant une adresse de réseau, le réseau local (10) mémorise, en les associant, le numéro d'appel du terminal (2b) et l'adresse de la base (1a-1e, 9) à laquelle il est relié et, en cas d'appel destiné au terminal (2b), le réseau (10) recherche l'adresse de base, associée en mémoire au numéro d'appel du terminal (2b), et dirige l'appel vers cette adresse.

4. Procédé selon l'une des revendications 1 à 3, dans lequel, lorsque le terminal (2b) n'est localisé dans aucune cellule, le réseau local (10) dirige les appels destinés au terminal (2b) vers une boîte vocale.

5. Procédé selon l'une des revendications 1 à 4, dans lequel, lorsque le terminal est dans la cellule de la base externe, en cas de réception par le réseau local d'un message informatique destiné au terminal, le réseau local appelle la base externe pour notifier la réception dudit message.

6. Réseau téléphonique local, pour la mise en oeuvre du procédé de la revendication 1, comprenant une pluralité de bases cellulaires (1a-1e), auxquelles au moins un terminal téléphonique (2b) peut se relier, avec la possibilité de passer d'une base à l'autre, des moyens (3) de localisation du terminal (2b) permettant de déterminer la base (1a-1e) à laquelle le terminal (2b) est relié, des moyens (4) de routage des appels, destinés au terminal (2b), vers la base (1a-1e) à laquelle celui-ci est relié, et des moyens (5) de connexion à un réseau externe (20), réseau **caractérisé par le fait que**, le terminal (2b) pouvant se relier à une base cellulaire (9) du réseau externe (20), les moyens de localisation (3) sont agencés pour, sur réception d'un message de la base externe (9) indiquant la présence du terminal (2b) dans sa cellule, localiser le terminal (2b) dans la cellule de la base externe (9), et les moyens de routage (4) sont agencés pour diriger les appels destinés au terminal (2b) vers la base externe (9) lorsque le terminal (2b) est localisé dans la cellule de celle-ci.

7. Réseau selon la revendication 6, dans lequel, le terminal (2b) ayant un numéro d'appel et chaque base (1a-1e, 9) ayant une adresse de réseau, les moyens de localisation (3) sont agencés pour mémoriser et associer le numéro d'appel du terminal (2b) et l'adresse de la base (1a-1e, 9) à laquelle le terminal (2b) est relié.
